# NEUE EUROPÄISCHE PATENTSCHRIFT

(11) **EP 3 260 289 B2**
(45) Veröffentlichungstag und Bekanntmachung des Hinweises auf die Entscheidung über den Einspruch: **09.08.2023**
(45) Hinweis auf die Patenterteilung: 02.09.2020
(21) Anmeldenummer: 17174921.1
(22) Anmeldetag: 08.06.2017
(51) Int. Cl.: B32B 5/18, B32B 5/32, B32B 7/02, B32B 15/04, B32B 15/20, B32B 1/02, E04B 1/82, E04B 5/00

(54) **VERBUNDELEMENT**
COMPOUND ELEMENT
ÉLÉMENT COMPOSITE

(30) Priorität: 09.06.2016 DE 102016110665
(43) Veröffentlichungstag der Anmeldung: 27.12.2017
(73) Patentinhaber: Odenwald-Chemie GmbH, 69250 Schönau (DE)
(72) Erfinder: Schwammberger, Torsten, 74862 Binau (DE); Reichert, Steffen, 69190 Walldorf (DE)
(74) Vertreter: Müller Schupfner & Partner Patent- und Rechtsanwaltspartnerschaft mbB

(56) Entgegenhaltungen:
- EP-A1- 0 312 937
- EP-A1- 0 317 833
- EP-A1- 1 061 190
- EP-A1- 1 983 121
- EP-A2- 2 116 683
- EP-B1- 0 427 918
- WO-A1-2011/141525
- DE-A1- 4 123 282
- DE-A1- 10 104 992
- DE-A1- 19 504 601
- DE-A1- 19 901 086
- DE-A1- 19 911 199
- DE-A1- 19 944 611
- DE-A1-102005 057 778
- DE-A1-102008 025 019
- DE-A1-102009 044 306
- DE-B4-102004 015 556
- DE-B4-102013 101 273
- DE-U- 1 988 346
- DE-U1- 9 110 813
- DE-U1-202010 006 506
- DE-U1-202011 005 415
- DE-U1-202011 005 416
- US-A- 5 538 779
- Produktdatenblatt "Fensterleiste" illbruck Bau-Technik GmbH
- Produktdatenblatt "Wayback Fensterleiste" illbruck Bau-TechnikGmbH mit Datum: 31.01.2005
- Wayback Übersicht Leisten 28.01.2005
- Sicherheitsdatenblatt SD4001001 illmod 600 (D-D) vom 02.03.2007
- Sicherheitsdatenblatt DS4001001 illmod 600 2006 vom 09 08 2006
- TP600 DS GB 04/2016
- TP600 Datenblatt 03+11
- TP600 Datenblatt 09/03
- TP600 Datenblatt 08/11
- illbruck Bauphysik 12/1994
- Export Invoices RE 151141413275 zu LS 346 vom 25.06.2013
- Export Invoices RE 151131427470 zu LS 109 vom 08.04.2013
- Artikelkarte Fensterleiste Stand vom 18.06.2016
- Tremco illbruck. The Wavback Machme. 20 02-2007

## Beschreibung

Die vorliegende Erfindung betrifft ein Verbundelement, insbesondere für Böden und Wände, die Verwendung einer Einlage in einem Hohlprofil, insbesondere für Böden und Wände, zur Absorption von Körperschall sowie ein Verfahren zur Herstellung eines Verbundelements, insbesondere für Böden und Wände.

Verbundelemente für Flächenbereiche, wie Böden und Wände, sind hinlänglich aus dem Stand der Technik bekannt. Hierbei werden Hohlprofile, beispielsweise aus Metall derart in einen Verbund gebracht, dass diese als Boden- oder Wandbelag dienen können, beispielsweise für Balkone und Terrassen oder Zwischenböden im Gebäudeinnenraum. Problematisch bei derartigen Systemen ist jedoch, dass beim Belasten der Oberfläche, beispielsweise beim Begehen oder durch Umwelteinflüsse wie Regen oder Hagel, ein Tritt- oder Körperschall erzeugt wird, welcher als störende Lärmemission wahrgenommen wird. Um eine derartige Schallemission zu verringern, ist es bekannt, die Hohlprofile auszuschäumen oder auszugießen. Die Einlage bei den bekannten Systemen wird somit quasi in situ, d. h. unmittelbar am Ort, hergestellt und mit dem Hohlprofil verbunden. Problematisch bei derartigen Fertigungsverfahren ist jedoch, dass - da die Hohlprofile mehrere Meter lang sein können - ein hoher Fertigungsaufwand notwendig ist, um die Einlage homogen über die gesamte Länge des Hohlprofils in diesem zu erzeugen und bereit zu stellen.

EP 1 061 100 A1 offenbart ein Sandwichelement, welches vielschichtig, schallisolierend und mechanisch belastbar ausgelegt ist. Dabei ist ein Plastikkern mit zwei Deckschichten bedeckt, so dass eine Lücke oder eine Vielzahl an Lücken zwischen dem Plastikkern und den Schichten entsteht und somit ein schalldämpfender Effekt entsteht. Zudem ist die Plastikkernschicht aus einem porösen Material, welches zumindest 50% offene Zellen hat.

Die DE 195 04 601 A1 betrifft ein wärmegedämmtes Verbundprofil für eine Fassadenkonstruktion, welche aus zwei im Abstand voneinander angeordneten Metallprofilen besteht und zwischen welchen ein Wärmedämmmaterial angeordnet ist.

Die DE 199 01 086 A1 betrifft eine schalldämmende Anordnung für eine Gebäudedecke, welche eine auf der Rohdecke aufliegende Dämmschicht aufweist.

Es ist somit Aufgabe der vorliegenden Erfindung, ein Verbundelement, insbesondere für Böden und Wände, eine Verwendung einer Einlage in einem Hohlprofil, insbesondere für Böden und Wände, sowie ein Verfahren zur Herstellung eines Verbundelements, insbesondere für Böden und Wände vorzusehen, welche eine verbesserte Absorption von Körperschall sowie eine einfache und kostengünstige Fertigung ermöglichen.

Diese Aufgabe wird durch ein Verbundelement, insbesondere für Böden und Wände, mit den Merkmalen des Anspruchs 1, eine Verwendung einer Einlage in einem Hohlprofil, insbesondere für Böden und Wände, mit den Merkmalen des Anspruchs 13 und ein Verfahren zur Herstellung eines Verbundelements, insbesondere für Böden und Wände, mit den Merkmalen des Anspruchs 14 gelöst. Bevorzugte Ausführungsformen ergeben sich aus den abhängigen Ansprüchen.

Erfindungsgemäß ist ein Verbundelement, insbesondere für Böden und Wände, vorgesehen, umfassend ein Hohlprofil, welches einen zumindest überwiegend geschlossenen Hohlraum aufweist, eine Einlage, welche in dem Hohlraum derart angeordnet oder anordenbar ist, dass sich die Einlage an zumindest zwei gegenüberliegenden Wandungen des Hohlprofils abstützt, wobei die Einlage aus einem offenporigen Material ausgebildet ist, welches nach einer Verformung eine verzögerte Rückstellung aufweist. Das Hohlprofil ist zweckmäßigerweise als Element ausgebildet, welches eine in einer Profilrichtung im Wesentlichen konstante Querschnittsgeometrie aufweist. In einem Querschnitt senkrecht zur Profilrichtung ist das Hohlprofil zweckmäßigerweise derart ausgebildet, dass es einen zumindest überwiegend geschlossenen Hohlraum aufweist. In anderen Worten, umschließt das Hohlprofil umfänglich einen Hohlraum um mindestens 50% des Umfanges, bevorzugt um mindestens 80% des Hohlraums. So kann das Hohlprofil im Querschnitt beispielsweise die Form eines "U" aufweisen. In einer besonders bevorzugten Ausführungsform ist das Hohlprofil derart ausgebildet, dass es im Querschnitt einen Hohlraum vollständig umgibt. Es versteht sich, dass das Hohlprofil einen Hohlraum aufweisen kann, wobei das Hohlprofil auch derart ausgebildet sein kann, dass es eine Vielzahl von, insbesondere parallel oder entlang einer Geraden, angeordneten Hohlräumen aufweist. Diese können in ihrer geometrischen Gestaltung verschieden ausgebildet sein, sind jedoch in einer besonders bevorzugten Ausführungsform allesamt als geschlossener Hohlraum ausgebildet. Die Form des Hohlraums kann beliebig gestaltet sein, ist jedoch in einer bevorzugten Ausführungsform im Wesentlichen rechteckig. Insbesondere weist der Hohlraum zwei gegenüberliegende Wandungen auf. Die gegenüberliegenden Wandungen können geneigt zueinander ausgebildet sein, sind jedoch in einer bevorzugten Variante im Wesentlichen parallel zueinander ausgerichtet. Es ist besonders zweckmäßig, wenn eine der gegenüberliegenden Wandungen diejenige Wandung ist, die im Gebrauch des Verbundelements die durch äußere Einwirkungen (Begehen, Regen oder Hagel) belastete Wandung darstellt. Weiterhin ist eine Einlage vorgesehen, die in dem Hohlraum angeordnet oder anordenbar ist. Die Einlage ist hierbei derart hinsichtlich Material und/oder Geometrie gestaltet, dass sich diese an den zwei gegenüberliegenden Wandungen des Hohlprofils abstützen kann. Die Einlage stützt sich dann an den zwei gegenüberliegenden Wandungen des Hohlprofils ab, wenn diese auf die gegenüberliegenden Wandungen eine, nach außen gerichtete Kraft ausübt. Die Einlage ist hierbei derart ausgebildet, dass diese nicht, wie im Stand der Technik in dem Hohlprofil ausgebildet, bzw. hergestellt wird, sondern die Herstellung der Einlage ex situ, d. h. außerhalb des Hohlraums erfolgt. So ist es besonders vorteilhaft, dass das Hohlprofil und die Einlage zwei getrennt voneinander hergestellte Elemente sind, welche zweckmäßigerweise in einem weiteren Fertigungsschritt nach deren Herstellung miteinander verbunden werden bzw. sind. Insbesondere ist die Einlage elastisch ausgebildet. Die Einlage ist aus einem offenporigen Material ausgebildet, welches nach einer Verformung eine verzögerte Rückstellung aufweist.

Unter dem Begriff "verzögerte Rückstellung" wird ein Aufstellen bzw. ein Rückstellen in Aufstellrichtung der eingedrückten Einlagen verstanden. In einem unbelasteten Zustand ist die Einlage bevorzugt in Ruhe, das heißt, dass die Einlage keine Rückstellung vollzieht bzw. eine Rückstellung vollständig vollzogen hat. Im unbelasteten Zustand erreicht die Einlage ihre maximale Aufstellhöhe. Die Einlage kann in einen belasteten/eingedrückten Zustand mit verringerter Aufstellhöhe durch eine Eindrückkraft gebracht werden. Dabei erstreckt sich die Eindrückkraft über Teile oder die die gesamte Fläche der Einlage und ist dabei orthogonal zu den gegenüberliegenden Wandungen angeordnet. Durch das Einwirken der Eindrückkraft auf die Einlage wird die Aufstellhöhe reduziert, was mit dem Verhältnis eingedrückte Aufstellhöhe zur maximaler Aufstellhöhe beschrieben wird. Bspw. wird die Aufstellhöhe durch das Einwirken der Eindrückkraft um 30% reduziert, was für die verzögerte Rückstellung bedeutet, dass der resultierende Rückstellweg 30% der maximalen Aufstellhöhe ist und der Rückstellweg die Differenz der Aufstellhöhe zwischen dem belastenden/eingedrückten Zustand und dem unbelasteten Zustand beschreibt. Sobald der belastete/eingedrückte Zustand aufgelöst wird, beginnt die verzögerte Rückstellung der Einlage. Aus dem belasteten/eingedrückten Zustand erreicht die Einlage wieder den unbelasteten Zustand oder bevorzugt einen weiteren Zustand, einen Zwischenzustand, welcher eine teilweise Rückstellung beschreibt. Dabei ist die Dauer der verzögerten Rückstellung erfindungsgemäß länger als die Rückstellung, welche eine Einlage ohne die Imprägnierung mit einem Bindemittel und/oder einem Füllstoff aufweist. Bevorzugterweise beträgt die verzögerte Rückstellung 10% der maximalen Aufstellhöhe pro Stunde bis 6000% der maximalen Aufstellhöhe pro Stunde bei einer Umgebungsluftfeuchtigkeit 40-60% und einer Umgebungstemperatur von ca. 20° Celsius. Der Vorteil dieser Ausführungsform ist, dass die verzögerte Rückstellung über die Imprägnierung individuell für die Anwendung angepasst werden kann. So ist beispielsweise eine schnelle Rückstellung bevorzugt, wenn lediglich die Einlage in einen Hohlraum eingebracht wird. Bevorzugterweise beträgt die verzögerte Rückstellung bevorzugt zwischen 300% und 6000%, bevorzugt zwischen 500% und 5000%, besonders bevorzugt zwischen 1000% und 3000% der maximalen Aufstellhöhe pro Stunde bei einer Umgebungsluftfeuchtigkeit 40-60% und einer Umgebungstemperatur von ca. 20° Celsius. Bei einer Kombination der Einlage mit bspw. elektronischen Komponenten ist eine sehr langsame Rückstellwirkung vorteilhaft, da genügend Zeit für die Montage der elektronischen Komponenten vorhanden sein muss. In dieser Ausführungsform beträgt die verzögerte Rückstellung zwischen 10% und 300%, bevorzugt zwischen 50% und 250%, besonders bevorzugt zwischen 100% und 175% der maximalen Aufstellhöhe pro Stunde bei einer Umgebungsluftfeuchtigkeit 40-60% und einer Umgebungstemperatur von ca. 20° Celsius. Zweckmäßigerweise lässt sich die verzögerte Rückstellung linear beschreiben, sodass bei zunehmendem Eindrücken die Rückstellzeit konstant zunimmt. In einer alternativen Ausführungsform ist die verzögerte Rückstellung durch eine exponentielle Funktion zu beschreiben, wobei die Rückstellzeit bei zunehmendem Eindrücken zunimmt. In einer weiteren Ausführungsform ist die verzögerte Rückstellung eine Kombination aus einer linearen und exponentiellen Funktion, wobei zuerst eine lineare Rückstellung und anschließend eine exponentiell verzögerte Rückstellung stattfinden. In einem Beispiel wird die Einlage um 33% ihrer maximalen Aufstellhöhe eingedrückt. Die Rückstellung beginnt in einer bevorzugten Ausführungsform sofort, jedoch spätestens nach drei Minuten, vorzugsweise eine Minute, und endet bevorzugterweise nach weniger als 24 Stunden. In einem weiteren Beispiel wird die Einlage um 35% ihrer maximalen Aufstellhöhe eingedrückt. In diesem Beispiel erfolgt die verzögerte Rückstellung in zwei Abschnitten, wobei die im ersten Abschnitt der verzögerten Rückstellung die Einlage sich um 10-40% des Rückstellwegs zurücklegt und im zweiten Abschnitt sich um 90-60% des Rückstellwegs zurücklegt. Im ersten Abschnitt beträgt die verzögerte Rückstellung bevorzugt zwischen 300% und 6000%, bevorzugt zwischen 500% und 5000%, besonders bevorzugt zwischen 1000% und 3000% der maximalen Aufstellhöhe pro Stunde bei einer Umgebungsluftfeuchtigkeit 40-60% und einer Umgebungstemperatur von ca. 20° Celsius. Im zweiten Abschnitt beträgt die verzögerte Rückstellung bevorzugt zwischen 300% und 6000%, bevorzugt zwischen 500% und 5000%, besonders bevorzugt zwischen 1000% und 3000% der maximalen Aufstellhöhe pro Stunde bei einer Umgebungsluftfeuchtigkeit 40-60% und einer Umgebungstemperatur von ca. 20° Celsius.

Hierdurch ist es besonders vorteilhafterweise möglich, nach Herstellung der Einlage, diese zu komprimieren und im komprimierten Zustand in den Hohlraum des Hohlprofils einzuführen. Da im komprimierten Zustand der Einlage deren Erstreckung in Höhenrichtung geringer ist als der Abstand zwischen den zwei gegenüberliegenden Wandungen des Hohlprofils, ist die Einlage besonders leicht in den Hohlraum einführbar. Die Höhenrichtung ist hierbei im Wesentlichen senkrecht zu einer Breitenrichtung, welche wiederum senkrecht zur Profilrichtung stehen. Die gegenüberliegenden Wandungen erstrecken sich vorteilhafterweise im Wesentlichen entlang der Breitenrichtung, so dass diese einen bestimmten Abstand in Höhenrichtung besitzen. Durch die Ausbildung der Einlage aus einem Material, welches eine verzögerte Rückstellung aufweist, ist es vorteilhafterweise möglich, die Einlage in den Hohlraum einzubringen, wobei nach Positionierung der Einlage diese anfängt, zu expandieren, bis diese an den gegenüberliegenden Wandungen des Hohlprofils sich abstützend zur Anlage gebracht wird und auf die gegenüberliegenden Wandungen nach außen gerichtete Kraft ausübt.

Zweckmäßigerweise ist das Hohlprofil im Wesentlichen unelastisch ausgebildet. Hierfür kann das Hohlprofil eine Geometrie aufweisen, welche gegenüber Verformung besonders widerstandsfähig ist. Bevorzugt ist das Hohlprofil aus einem im Wesentlichen unelastischen Material ausgebildet. Ein im Wesentlichen unelastisches Material weist hierbei ein Elastizitätsmodul >5000 N/mm², vorzugsweise > 25000 N/mm² auf. So kann das Material des Hohlprofils beispielsweise ein Metall, wie Aluminium, sein. Hierdurch wird ein besonders vorteilhaft stabiles Verbundelement ermöglicht.

Vorteilhafterweise ist die Einlage, zumindest teilweise, aus einem Schaum ausgebildet. Der Schaum kann ein offenzelliger Polyurethan-Weichschaum sein. Die Offenzelligkeit des offenporigen Schaums erhöht vorteilhafterweise die Schallabsorptionsfähigkeit der Einlage. Besonders zweckmäßigerweise weist der Schaum ein Raumgewicht von 15 bis 50 kg/m³, vorzugsweise 25 bis 35 kg/ m³ auf. Weiterhin bevorzugt ist die Offenzelligkeit des Schaums derart ausgebildet, dass, in einem Flächenschnitt betrachtet, 5 bis 30 Zellen pro cm, vorzugsweise 15 bis 25 Zellen pro cm vorgesehen sind. Beide vorstehend genannten Parameter sind derart gewählt, dass eine besonders vorteilhafte Schallabsorptionsfähigkeit ermöglicht wird.

Erfindungsgemäß ist die Einlage aus einem Material ausgebildet, welches zumindest teilweise mit einer Imprägnierung aus Bindemittel und Füllstoff getränkt und/oder beschichtet ist. Die Imprägnierung, bzw. das Imprägnat besteht vorteilhafterweise zu 40 bis 60% aus einem Bindemittel und zu 40 bis 60% aus mineralischen Füllstoffen. Beispielhafte Bindemittel können Polyacrylat, Kunstharz oder Synthesekautschuk sein. Beispielhafte Füllstoffe können Aluminiumhydroxid, Kalziumkarbonat, Kaolin, Magnetit oder Bariumsulfat sein. Es versteht sich, dass auch Verschnitte der jeweils genannten mineralischen Füllstoffe oder der jeweils genannten Bindemittel vorgesehen sein können. Durch die Tränkung oder Beschichtung der Einlage mit der Imprägnierung wird vorteilhafterweise eine verzögerte Rückstellung ermöglicht, da sich die Tränkung in den offenen Poren des Materials absetzt. Anders als bei einer Beschichtung, die nur oberflächlich wirkt, ist die Eindringtiefe in das Material der Einlage bei einer Tränkung sehr viel größer, so dass die Wirkung der verzögerten Rückstellung noch verstärkt werden kann.

In einer Ausführungsform ist die Einlage aus einem homogenen Material gebildet. In anderen Worten kann die Einlage derart gestaltet sein, dass sie lediglich aus ein- und demselben offenporigen Grundmaterial gebildet ist. Bevorzugt ist das Material derart mit einer Imprägnierung getränkt, dass es auch eine homogene Verteilung eines Imprägnats aufweist. In einer alternativen Ausführungsform kann die aus einem homogenen Material bestehende Einlage auch nur bereichsweise mit einem Imprägnat getränkt oder beschichtet sein.

In einer besonders bevorzugten Ausführungsform ist die Einlage derart ausgebildet, dass diese ein Masse-Feder-Dämpfungs-System, bzw. -Element ausbildet. Hierbei ist ein Bereich der Einlage als Massebereich ausgebildet, wobei ein zweiter, daran angrenzender Bereich der Einlage die Funktion eines Feder-Dämpfers ausfüllt, d. h. gleichzeitig eine Federkonstante und Dämpfcharakteristik aufweist. Die Feder-Charakteristik und Dämpfer-Charakteristik wirkt somit parallel, während die Masse in Reihe hierzu angeordnet ist. Hierdurch ist es besonders vorteilhaft möglich, Vibrationen und Körperschall im Verbundelement zu minimieren. Dies ist möglich, da der den Feder-Dämpfer ausbildende Bereich der Einlage eine schwingungstechnische Entkoppelung der Masse ermöglicht.

Bevorzugt ist die Einlage aus einer Vielzahl, vorzugsweise zwei, Schichten verschiedener Materialien oder Eigenschaften ausgebildet. Dies ist dann beispielsweise der Fall, wenn die Einlage als wie vorstehend beschriebenes Masse-Feder-Dämpfungs-System ausgebildet ist. So kann eine zweite Schicht aus einem offenporigen Material mit verzögerter Rückstellung ausgebildet sein, während eine erste Schicht keine verzögerte Rückstellung aufweisen muss. Die erste Schicht kann auch als im Wesentlichen formstabiler Körper ausgebildet sein. Besonders bevorzugt ist jedoch auch die erste Schicht aus einem Material mit verzögerter Rückstellung ausgebildet. Auch ist denkbar, eine dritte Schicht vorzusehen, welche zweckmäßigerweise an der zweiten Schicht angeordnet und der ersten Schicht gegenüber liegend ist. Die dritte Schicht kann beispielsweise in Form einer Folie oder Beschichtung ausgebildet sein, die einen besonders niedrigen Reibungskoeffizienten aufweist, um die Einlage in den Hohlraum besonders einfach einbringen zu können.

Zweckmäßigerweise ist die Einlage in dem Hohlraum derart angeordnet oder anordenbar, dass sich eine erste Schicht an einer belasteten Wandung abstützt. Die zweite Schicht ist somit derjenige Bereich der Einlage, welcher der belasteten Wandung abgewandt ist. Die belastete Wandung ist derjenige Bereich des Hohlprofils, welcher im Benutzungszustand des Verbundelements durch Betreten oder Umwelteinflüsse belastet wird.

Zweckmäßigerweise hat eine erste Schicht ein größeres Raumgewicht als eine zweite Schicht. Hierdurch wird aufgrund des vorstehend beschriebenen FederMasse-Prinzips eine besonders vorteilhafte Verringerung von Vibration und Körperschall ermöglicht. Die Absorption von Schall ist besonders vorteilhaft, wenn die erste Schicht der belasteten Wandung zugewandt ist bzw. an dieser anliegt.

Besonders vorteilhaft ist es hinsichtlich der Schallabsorption, wenn das Verhältnis des Raumgewichts der zweiten Schicht zur ersten Schicht zwischen 0,15 und 0,45, vorzugsweise zwischen 0,27 und 0,33 liegt. Besonders bei einem Wert zwischen 0,27 und 0,33 wirkt die Einlage als optimales Masse-Feder-Dämpfungs-System. Hierbei kann die Einlage derart ausgebildet sein, dass der Bereich der ersten Schicht ein Raumgewicht zwischen 200 und 1000 kg/m³, vorzugsweise 400 und 600 kg/m³ aufweist. Dieses Raumgewicht wird insbesondere durch die Zusammensetzung der Imprägnierung erzielt. Die zweite Schicht weist zweckmäßigerweise ein Raumgewicht zwischen 50 und 250 kg/m³, vorteilhafterweise zwischen 120 und 175 kg/m³ auf. Entsprechend ist auch dieses Raumgewicht durch die Zusammensetzung der Imprägnierung einstellbar.

Vorteilhafterweise weisen die erste und zweite Schicht unterschiedliche Dicken auf. Auch hierdurch ist das Absorptionsverhalten der Einlage optimal einstellbar. Die Dicke ist hierbei entlang der Höhenrichtung bemessen.

Vorteilhafterweise ist das Verhältnis der Dicke der ersten Schicht zur zweiten Schicht kleiner 1 und liegt vorzugsweise zwischen 0,3 und 0,85 und besonders bevorzugt zwischen 0,6 und 0,75. Insbesondere bei einem Verhältnis zwischen 0,3 und 0,85 ist die Dicke der zweiten Schicht in Bezug zu der Dicke der gesamten Einlage derart bemessen, dass ein möglichst großer Bereich eine verzögerte Rückstellung aufweist, wodurch eine einfache Montage der Einlage in dem Hohlprofil ermöglicht wird. Für ein optimales Schallabsorptionsverhalten hat sich ein Verhältnis zwischen 0,6 und 0,75 als besonders vorteilhaft erwiesen.

Vorzugsweise hat eine erste Schicht eine größere Stauchhärte als eine zweite Schicht. In anderen Worten ist die Festigkeit der ersten Schicht größer als die der zweiten Schicht. Hierdurch wird eine besonders gute Anlage der ersten Schicht an der Innenoberfläche der Wandung des Hohlprofils erzielt.

Besonders bevorzugt liegt das Verhältnis der Stauchhärte der zweiten Schicht zur Stauchhärte der ersten Schicht zwischen 0,2 und 0,8, vorzugsweise zwischen 0,3 und 0,5. Besonders bei einem Verhältnis der Stauchhärten zwischen 0,3 und 0,5 wird ein besonders optimales Absorptionsverhalten erzielt, da hier ein sehr ausgeglichenes Masse-Feder-Dämpfungs-System geschaffen ist. So kann die Stauchhärte der ersten Schicht bis zu 10 kPa und der zweiten Schicht bis zu 12 kPa nach DIN EN ISO 33861-1 bei 40% Kompression betragen.

In einer bevorzugten Variante sind die erste und zweite Schicht vorzugsweise stoffflüssig miteinander verbunden. Die stoffschlüssige Verbindung kann beispielsweise über eine Verschweißung oder Verklebung erfolgen, wobei die stoffschlüssige Verbindung insbesondere dadurch gekennzeichnet ist, dass die erste und zweite Schicht nicht zerstörungsfrei voneinander trennbar sind. Alternativ hierzu können die erste und zweite Schicht auch nur aufeinander gelegt sein und besonders bevorzugt aufgrund einer gewissen Klebrigkeit des Imprägnats aneinander haften.

In einer weiter bevorzugten Ausführungsform weisen die erste und/oder zweite Schicht Indikatormittel auf, die es ermöglichen, die erste und zweite Schicht voneinander zu differenzieren. Hierdurch kann besonders vorteilhafterweise sichergestellt werden, dass der Monteur die Einlage in der richtigen Orientierung im Hohlraum des Hohlprofils anordnet. Die Indikatormittel können beispielsweise derart ausgebildet sein, dass die Schichten unterschiedliche Farben aufweisen, oder an diesen Markierungen vorgesehen sind.

Vorzugsweise liegt das Verhältnis des vom Hohlraum umschlossenen Raums zum Volumen der Einlage zwischen 0,5 und 0,95, vorzugsweise zwischen 0,7 und 0,85. Das Verhältnis ist ein einem Zustand des Verbundelements gemessen, in welchem die Einlage in dem Hohlraum des Hohlprofils angeordnet ist. Da sich die Einlage an zwei gegenüberliegenden Wandungen abstützt, erstreckt sich somit die Einlage nicht in Breitenrichtung über den gesamten Hohlraum. Es hat sich erwiesen, dass eine ausreichende Schallabsorption bei einem Volumenverhältnis zwischen 0,7 und 0,85 erzielt werden kann.

Weiterhin bevorzugt weist das Hohlprofil eine Vielzahl von Hohlräumen und eine oder eine Vielzahl von Einlagen auf, wobei das Verhältnis des von sämtlichen Hohlräumen umschlossenen Raums zum Volumen der Einlage(n) zwischen 0,1 und 0,3, vorzugsweise zwischen 0,15 und 0,25 liegt. Ein derartiges Verhältnis ist beispielsweise erzielbar, wenn bei einem Hohlprofil mit einer Vielzahl von Hohlräumen nicht jeder Hohlraum mit der Einlage bestückt ist. So kann beispielsweise bei einem Hohlprofil mit drei Hohlräumen lediglich der mittlere Hohlraum mit der Einlage bestückt sein. Bei einem Mehrkammer-Hohlprofil mit einer Vielzahl von Hohlräumen hat sich gezeigt, dass ein Volumenverhältnis zwischen 0,1 und 0,3 ausreicht, um eine notwendige Schallabsorption zu erzielen.

Vorzugsweise weist die Einlage im nicht im Hohlraum angeordneten Zustand eine Dicke auf, welche größer ist als der Abstand zwischen den zwei gegenüberliegenden Wandungen. Hierbei wird die Dicke der Einlage im nicht komprimierten Zustand bestimmt.

Zweckmäßigerweise liegt das Verhältnis der Dicke der Einlage im nicht komprimierten Zustand zum Abstand der zwei gegenüberliegenden Wandungen zwischen 1,05 und 1,8, vorzugsweise zwischen 1,2 und 1,4. Es hat sich gezeigt, dass insbesondere bei einem Verhältnis zwischen 1,2 und 1,4 die Einlage im montierten und rückgestellten Zustand eine optimale Kraft auf die zwei gegenüber liegenden Wandungen ausdrückt, um somit den Körperschall optimal zu absorbieren.

In einer bevorzugten Ausführungsform ist das Verbundelement derart gestaltet, dass die Einlage in Profil-Längsrichtung zwei gegenüberliegende Enden hat, von welchen wenigstens eines, vorzugsweise beide, in Profil-Längsrichtung zurückgebogen ist bzw. sind. In anderen Worten ist die Erstreckung der Einlage in Profilrichtung länger als die Erstreckung des Hohlprofils in Profilrichtung. Der überstehende Bereich der Einlage ist in Profilrichtung zurückgebogen, bzw. umgeklappt, bzw. umgekrempelt, so dass an den Enden des Hohlprofils ein Bereich der Einlage vorgesehen ist, in welchem diese gedoppelt ist. Hierdurch gelangt die Einlage während des Rückstellens sehr viel schneller mit den zwei gegenüberliegenden Wandungen in Eingriff und sichert somit die Lage der Einlage im Hohlprofil.

Weiterhin erfindungsgemäß ist eine Verwendung einer Einlage in einem Hohlprofil, insbesondere für Böden und Wände, zur Absorption von Körperschall vorgesehen, wobei die Einlage aus einem offenporigen Material ausgebildet ist, welches nach einer Verformung eine verzögerte Rückstellung aufweist. Es versteht sich, dass sämtliche mit Bezug zu dem erfindungsgemäßen Verbundelement und deren bevorzugten Ausführungsformen beschriebenen Merkmale und Vorteile betreffend die Einlage und deren Anordnung im Verbundelement gleichfalls für die erfindungsgemäße Verwendung einer Einlage in einem Hohlprofil zutreffen.
- Weiterhin erfindungsgemäß ist ein Verfahren zur Herstellung eines Verbundelements, insbesondere für Böden und Wände vorgesehen, umfassend die Schritte: Bereitstellen eines Hohlprofils, welches einen zumindest überwiegend geschlossenen Hohlraum aufweist;
- Bereitstellen einer Einlage, die aus einem offenporigen Material ausgebildet ist, welches nach einer Verformung eine verzögerte Rückstellung aufweist, in einem vorkomprimierten Zustand;
- Anordnen der Einlage in deren vorkomprimierten Zustand in dem Hohlraum derart, dass sich die Einlage nach einer Dekomprimierung an zumindest zwei gegenüber liegenden Wandungen abstützt.

In anderen Worten werden somit Hohlprofil und Einlage getrennt voneinander hergestellt und dann miteinander montiert. Die Montage der Einlage in dem Hohlprofil kann beispielsweise erfolgen, indem die Einlage in den Hohlraum des Hohlprofils eingeschoben oder eingezogen wird. Es versteht sich, dass die weiteren Merkmale und Vorteile des erfindungsgemäßen Verbundelements und dessen bevorzugte Ausführungsformen sowie der erfindungsgemäßen Verwendung einer Einlage in einem Hohlprofil gleichfalls in dem erfindungsgemäßen Verfahren Anwendung finden können.

Weitere Merkmale und Vorteile ergeben sich aus der nachfolgenden Beschreibung von bevorzugten Ausführungsformen mit Bezug auf die beigefügten Figuren. Es zeigen:
- Fig. 1:: eine geschnittene perspektivische Ansicht einer ersten Ausführungsform eines erfindungsgemäßen Verbundelements.

- Fig. 2:: eine geschnittene perspektivische Ansicht einer zweiten Ausführungsform eines erfindungsgemäßen Verbundelements.
- Fig. 3:: eine geschnittene Ansicht einer bevorzugten Ausführungsform einer Einlage im nicht montierten Zustand.

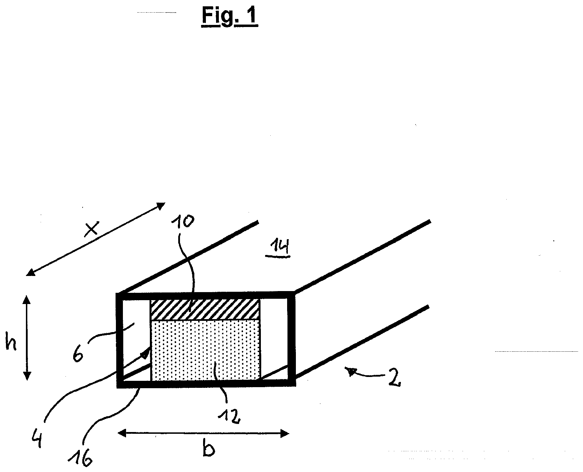

In Fig. 1 ist eine geschnittene, perspektivische Ansicht einer ersten, bevorzugten Ausführungsform des erfindungsgemäßen Verbundelements dargestellt. Das Verbundelement umfasst ein Hohlprofil 2 sowie eine Einlage 4.

Das Hohlprofil umschließt einen Hohlraum 6, welcher in der dargestellten Ausführungsform im Wesentlichen rechteckig in einem senkrecht zu einer Profilrichtung x stehenden Querschnitt ausgebildet ist. Der Hohlraum 6 erstreckt sich hierbei ein einer Breitenrichtung b und Höhenrichtung h.

Die Einlage 4 ist in der dargestellten Ausführungsform aus einer ersten Schicht 10 und einer zweiten Schicht 12 ausgebildet. Die erste Schicht 10 ist hierbei als Masse-Bereich ausgebildet und weist vorteilhafterweise ein größeres Raumgewicht als die zweite Schicht 12 auf. Die zweite Schicht 12 wirkt entsprechend als Feder-Dämpfer und ist vorteilhafterweise aus einem imprägnierten Schaum ausgebildet. Auch die erste Schicht 10 kann aus einem imprägnierten Schaum ausgebildet sein, wobei ein Imprägnat verwendet ist, welches ein höheres Raumgewicht der ersten Schicht 10 erzielt.

Das Hohlprofil 2 weist zwei gegenüberliegende Wandungen 14, 16 auf, an welchen sich die Einlage 4 im dekomprimierten Zustand abstützt. Besonders vorteilhaft ist es, wenn die erste Schicht 10 derjenigen Wandung 14 zugewandt, bzw. an dieser anliegend ist, welche die durch Betreten oder Umwelteinflüsse belastete Wandung ist.

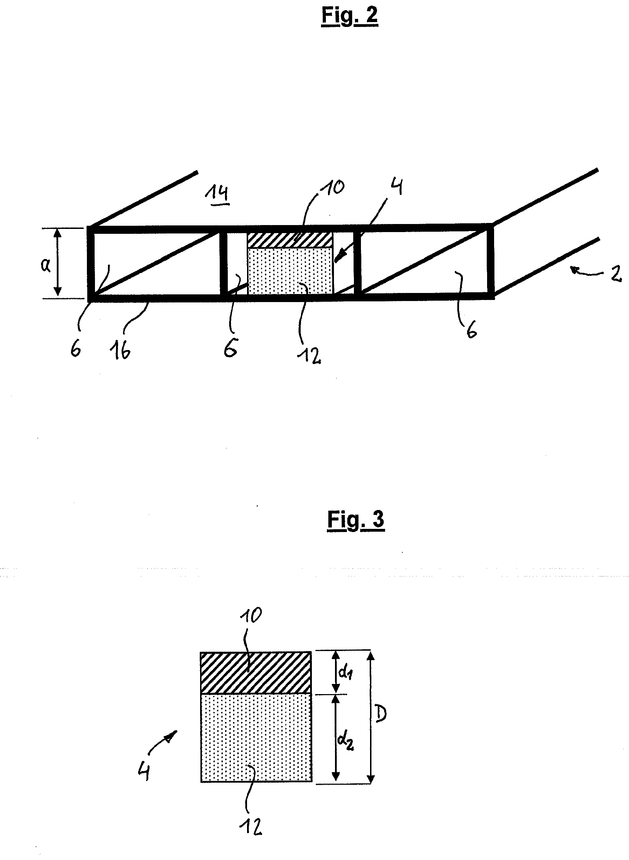

In Fig. 2 ist eine zweite bevorzugte Ausführungsform des erfindungsgemäßen Verbundelements sowie in Fig. 3 einer bevorzugten Ausführungsform einer Einlagen dargestellt. Im Unterschied zum Verbundsystem in Fig. 1 weist das Hohlprofil 2 drei Hohlräume 6 auf, von welchen lediglich der mittlere Hohlraum 6 mit der Einlage 4 bestückt ist.

Die Wandungen 14, 16 sind in einem Abstand a voneinander in Höhenrichtung h beabstandet. Im dekomprimierten, nicht eingebauten Zustand weist die Einlage 4 eine, in Höhenrichtung h bemessene, Dicke D auf, welche größer ist als der Abstand a. Im Übrigen liegt ein Verhältnis der Dicke d₁ der ersten Schicht 10 zur Dicke d₂ der zweiten Schicht 12 in einem Bereich von 0,6-0,75, wodurch ein besonders effizientes Masse-Feder-Dämpfer-Element bereitgestellt werden kann.

### Bezugszeichenliste:

- 2: Hohlprofil
- 4: Einlage
- 6: Hohlraum
- 10: erste Schicht
- 12: zweite Schicht
- 14: Wandung
- 16: Wandung
- a: Abstand
- b: Breitenrichtung
- D, d₁, d₂: Dicken
- h: Höhenrichtung
- X: Profilrichtung

## Patentansprüche

1. Verbundelement, insbesondere für Böden, umfassend
ein Hohlprofil (2), welches einen zumindest überwiegend geschlossenen Hohlraum (6) aufweist,
eine Einlage, welche in dem Hohlraum (6) derart angeordnet oder anordenbar ist, dass sich die Einlage (4) an zumindest zwei gegenüberliegenden Wandungen (14, 16) des Hohlprofils (2) abstützt,
**dadurch gekennzeichnet, dass**
die Einlage (4) aus einem offenporigen Material ausgebildet ist, welches nach einer Verformung eine verzögerte Rückstellung aufweist,
wobei die verzögerte Rückstellung ein Aufstellen oder ein Rückstellen in Aufstellrichtung der eingedrückten Einlage ist,
wobei die Einlage (4) aus einem Material ausgebildet ist, welches zumindest teilweise mit einer Imprägnierung aus Bindemittel und Füllstoff getränkt und/oder beschichtet ist,
wobei die Dauer der verzögerten Rückstellung länger als die Rückstellung ist, welche eine Einlage ohne die Imprägnierung mit einem Bindemittel und/oder einem Füllstoff aufweist.

2. Verbundelement nach einem der vorhergehenden Ansprüche, wobei die Einlage (4) zumindest teilweise aus einem Schaum ausgebildet ist.

3. Verbundelement nach einem der vorhergehenden Ansprüche, wobei die Einlage (4) aus einer Vielzahl, vorzugsweise zwei, Schichten (10, 12) verschiedener Materialien oder Eigenschaften ausgebildet ist.

4. Verbundelement nach Anspruch 3, wobei die Einlage (4) in dem Hohlraum (6) derart angeordnet oder anordenbar ist, dass sich die erste Schicht (10) an einer belasteten Wandung (14) abstützt.

5. Verbundelement nach einem der Ansprüche 3 oder 4, wobei eine erste Schicht (10) ein größeres Raumgewicht als eine zweite Schicht (12) hat.

6. Verbundelement nach einem der Ansprüche 3 - 5, wobei die erste und zweite Schicht (10, 12) unterschiedliche Dicken (d₁, d₂) aufweisen.

7. Verbundelement nach einem der Ansprüche 3 - 6, wobei eine erste Schicht (10) eine größere Stauchhärte als eine zweite Schicht (12) hat.

8. Verbundelement nach einem der Ansprüche 3 - 7, wobei die erste und zweite Schicht (10, 12) vorzugsweise stoffschlüssig miteinander verbunden sind.

9. Verbundelement nach einem der vorhergehenden Ansprüche, wobei die Einlage (4) im nicht im Hohlraum (6) angeordneten Zustand eine Dicke (D) aufweist, welche größer ist als der Abstand (a) zwischen den zwei gegenüberliegenden Wandungen (14, 16).

10. Verbundelement nach einem der vorhergehenden Ansprüche, wobei die Einlage (4) in Profillängsrichtung (x) zwei gegenüberliegende Enden hat, von welchen wenigstens eines zurückgebogen ist.

11. Verwendung einer Einlage (4) in einem Hohlprofil (2), insbesondere für Böden, zur Absorption von Körperschall, wobei die Einlage (4) aus einem offenporigen Material ausgebildet ist,
**dadurch gekennzeichnet, dass**
die Einlage (4) nach einer Verformung eine verzögerte Rückstellung aufweist,
wobei die verzögerte Rückstellung ein Aufstellen oder ein Rückstellen in Aufstellrichtung der eingedrückten Einlage ist,
wobei die Einlage (4) aus einem Material ausgebildet ist, welches zumindest teilweise mit einer Imprägnierung aus Bindemittel und Füllstoff getränkt und/oder beschichtet ist,
wobei die Dauer der verzögerten Rückstellung länger als die Rückstellung ist, welche eine Einlage ohne die Imprägnierung mit einem Bindemittel und/oder einem Füllstoff aufweist.

12. Verfahren zur Herstellung eines Verbundelements, insbesondere für Böden, umfassend die Schritte:
Bereitstellen eines Hohlprofils (2), welches einen zumindest überwiegend geschlossenen Hohlraum (6) aufweist,
**dadurch gekennzeichnet**,
Bereitstellen einer Einlage (4), die aus einem offenporigen Material ausgebildet ist, welches nach einer Verformung eine verzögerte Rückstellung aufweist, in einem vorkomprimierten Zustand,
wobei die verzögerte Rückstellung ein Aufstellen oder ein Rückstellen in Aufstellrichtung der eingedrückten Einlage ist,
wobei die Einlage (4) aus einem Material ausgebildet ist, welches zumindest teilweise mit einer Imprägnierung aus Bindemittel und Füllstoff getränkt und/oder beschichtet ist,
wobei die Dauer der verzögerten Rückstellung länger als die Rückstellung ist, welche eine Einlage ohne die Imprägnierung mit einem Bindemittel und/oder einem Füllstoff aufweist,
Anordnen der Einlage (4) in deren vorkomprimierten Zustand in dem Hohlraum (6) derart, dass sich die Einlage (4) nach einer Dekomprimierung an zumindest zwei gegenüberliegenden Wandungen (14, 16) des Hohlprofils (2) abstützt.

## Claims

1. Composite element, in particular for floors, comprising
a hollow profile (2), which has an at least predominantly closed cavity (6) an insert which is arranged or can be arranged in the cavity (6) in such a way that the insert (4) is supported on at least two opposite walls (14, 16) of the hollow profile (2),
**characterized in that**
the insert (4) is made of an open-pored material which has a delayed recovery after deformation,
wherein the delayed recovery is a setting up or a resetting in the setting up direction of the depressed insert,
wherein the insert (4) is formed of a material which is at least partially impregnated and/or coated with an impregnation of binder and filler,
wherein the duration of the delayed recovery is longer than the recovery exhibited by an insert without the impregnation with a binder and/or a filler.

2. Composite element according to any one of the preceding claims, wherein the insert (4) is formed at least partially from a foam.

3. A composite element according to any one of the preceding claims, wherein the insert (4) is formed of a plurality, preferably two, layers (10, 12) of different materials or properties.

4. Composite element according to claim 3, wherein the insert (4) is arranged or arrangeable in the cavity (6) such that the first layer (10) is supported on a loaded wall (14).

5. The composite element of any one of claims 3 or 4, wherein a first layer (10) has a greater bulk density than a second layer (12).

6. Composite element according to any one of claims 3 - 5, wherein the first and second layers (10, 12) have different thicknesses (d1, d2).

7. A composite element according to any one of claims 3 - 6, wherein a first layer (10) has a greater crush hardness than a second layer (12).

8. Composite element according to any one of claims 3-7, wherein the first and second layers (10, 12) are preferably bonded to one another.

9. Composite element according to one of the preceding claims, wherein the insert (4) in the state not arranged in the cavity (6) has a thickness (D) which is greater than the distance (a) between the two opposing walls (14, 16).

10. Composite element according to any one of the preceding claims, wherein the insert (4) has two opposite ends in the longitudinal direction of the profile (x), at least one of which is bent back.

11. Use of an insert (4) in a hollow profile (2), in particular for gusts, for absorbing structure-borne sound, the insert (4) being formed from an open-pored material,
**characterized in that**
the insert (4) has a delayed recovery after deformation,
wherein the delayed recovery is a setting up or a resetting in the setting up direction of the depressed insert,
wherein the insert (4) is formed from a material which is at least partially impregnated and/or coated with an impregnation of binder and filler,
wherein the duration of the delayed recovery is longer than the recovery exhibited by an insert without the impregnation with a binder and/or a filler.

12. Method for producing a composite element, in particular for floors, comprising the steps:
Providing a hollow profile (2) which has an at least predominantly closed cavity (6),
**characterized in that**
providing, in a precompressed state, an insert (4) formed of an open-pored material having a delayed recovery after deformation,
wherein the delayed recovery is a set-up or a set-back in the set-up direction of the compressed insert,
wherein the insert (4) is formed of a material which is at least partially impregnated and/or coated with an impregnation of binder and filler,
wherein the duration of the delayed recovery is longer than the recovery exhibited by an insert without the impregnation with a binder and/or a filler,
arranging the insert (4) in its precompressed state in the hollow space (6) in such a way that, after decompression, the insert (4) is supported on at least two opposite walls (14, 16) of the hollow profile (2).

## Revendications

1. Élément composite, en particulier pour des sols, incluant
un profilé creux (2) qui comporte une cavité au moins majoritairement fermée (6),
un insert, qui est agencé ou peut être agencé dans la cavité (6) de telle façon que l'insert (4) s'appuie contre au moins deux parois opposées (14, 16) du profilé creux (2),
**caractérisé en ce que**
l'insert (4) est réalisé en un matériau à pores ouverts qui présente après une déformation une récupération retardée,
dans lequel la récupération retardée est un redressement ou un rappel dans la direction de redressement de l'insert enfoncé,
dans lequel l'insert (4) est réalisé en un matériau qui est au moins partiellement imbibé et/ou revêtu d'une imprégnation constituée de liant et de matière de remplissage,
dans lequel la durée de la récupération retardée est plus longue que la récupération que présenterait un insert sans imprégnation avec un liant et/ou une matière de remplissage.

2. Élément composite selon la revendication précédente, dans lequel l'insert (4) est réalisé au moins partiellement à partir d'une mousse.

3. Élément composite selon l'une des revendications précédentes, dans lequel l'insert (4) est réalisé à partir d'une pluralité de couches (10, 12), de préférence de deux couches de matériaux ou de propriétés différentes.

4. Élément composite selon la revendication 3, dans lequel l'insert (4) est agencé ou peut être agencé dans la cavité (6) de telle façon que la première couche (10) s'appuie contre une paroi (14) sous charge.

5. Élément composite selon l'une des revendications 3 ou 4, dans lequel une première couche (10) présente une plus grande densité qu'une seconde couche (12).

6. Élément composite selon l'une des revendications 3 à 5, dans lequel la première et la seconde couche (10, 12) présentent des épaisseurs différentes (d1, d2).

7. Élément composite selon l'une des revendications 3 à 6, dans lequel une première couche (10) présente une plus grande résistance à l'enfoncement qu'une seconde couche (12).

8. Élément composite selon l'une des revendications 3 à 7, dans lequel la première et la seconde couche (10, 12) sont de préférence reliées l'une à l'autre par coopération de matières.

9. Élément composite selon l'une des revendications précédentes, dans lequel l'insert (4) présente, dans l'état non agencé dans la cavité (6), une épaisseur (D) qui est plus grande que la distance (a) entre les deux parois opposées (14, 16).

10. Élément composite selon l'une des revendications précédentes, dans lequel l'insert (4) a deux extrémités opposées dans la direction longitudinale du profilé (X), dont l'une au moins est recourbée en retour.

11. Utilisation d'un insert (4) dans un profilé creux (2), en particulier pour des sols, destiné à l'absorption de bruits transmis par les structures, dans laquelle l'insert (4) est réalisé en un matériau à pores ouverts,
**caractérisée en ce que**
l'insert (4) présente après une déformation une récupération retardée,
dans laquelle la récupération retardée est un redressement ou un rappel dans la direction de redressement de l'insert enfoncé,
dans laquelle l'insert (4) est réalisé en un matériau qui est au moins partiellement imbibé et/ou revêtu d'une imprégnation constituée d'un liant et d'une matière de remplissage,
dans laquelle la durée de la récupération retardée est plus longue que la récupération que présenterait un insert sans imprégnation avec un liant et/ou une matière de remplissage.

12. Procédé pour la réalisation d'un élément composite, en particulier pour des sols, incluant les étapes consistant à :
préparer un profilé creux (2) qui présente une cavité (6) au moins majoritairement fermée,
**caractérisé par**
l'étape consistant à préparer un insert (4) qui est réalisé en un matériau à pores ouverts qui présente après une déformation une récupération retardée, dans un état préalablement comprimé,
dans lequel la récupération retardée est un redressement ou un rappel dans la direction de redressement de l'insert enfoncé,
dans lequel l'insert (4) est réalisé en un matériau qui est au moins partiellement imbibé et/ou revêtu d'une imprégnation constituée d'un liant et d'une matière de remplissage,
dans lequel la durée de la récupération retardée est plus longue que la récupération que présenterait un insert sans l'imprégnation avec un liant et/ou une matière de remplissage,
et l'étape consistant à agencer l'insert (4) dans son état préalablement comprimé dans la cavité (6) de telle façon que l'insert (4) s'appuie après une décompression contre au moins deux parois opposées (14, 16) du profilé creux (2).
